# EUROPÄISCHE PATENTSCHRIFT

(11) **EP 1 213 696 B1**
(45) Veröffentlichungstag und Bekanntmachung des Hinweises auf die Patenterteilung: **27.07.2005**
(21) Anmeldenummer: 01128144.1
(22) Anmeldetag: 27.11.2001
(51) Int. Cl.: G09F 3/02, G09F 3/10

(54) **Etikett**
Label
Etiquette

(30) Priorität: 08.12.2000 DE 20020859 U; 23.02.2001 DE 20103260 U
(43) Veröffentlichungstag der Anmeldung: 12.06.2002
(73) Patentinhaber: Huhtamaki Ronsberg, Zweigniederlassung der Huhtamaki Deutschland GmbH & Co. KG, 87671 Ronsberg/Allgäu (DE)
(72) Erfinder: Braunmiller, Jürgen, 87776 Attenhausen (DE)
(74) Vertreter: Popp, Eugen, Dr.

(56) Entgegenhaltungen:
- EP-A- 0 231 882
- EP-A- 0 273 840
- DE-A- 4 242 085
- US-A- 5 692 834
- US-A- 5 909 805

## Beschreibung

Die Erfindung betrifft ein Etikett, insbesondere Verpackungsetikett zum Versiegeln eines Kaffeepaketes oder einer ähnlichen Verpackung, nach dem Oberbegriff des Anspruchs 1.

Etiketten dieser Art sind seit langem und in großer Vielgestaltigkeit bekannt und längst zu einem unentbehrlichen Hilfsmittel in der Verpackungsindustrie, im Handel, in der Werbung, im Bürobereich etc. geworden. Neben dem hier im Blickpunkt des Interesses liegenden Einsatz zum Versiegeln von Verpackungen, deren Wandung insbesondere aus Papier oder Pappe oder auch einer Kunststoff- oder Metallfolie gebildet ist, werden Etiketten dieser Art auch als Aufkleber bei der werblichen Aufmachung und/oder Auspreisung bzw. für die Unversehrtheits-Kennzeichnung ganz andersartiger Waren eingesetzt.

Ein jedermann aus der Alltagserfahrung bekannter Mangel vieler solcher Etiketten ist es, daß beim Entsiegeln der Verpackung oder beim Versuch, das Etikett von einer Ware abzulösen, das Etikett zerreißt und ein Teil an der Verpackung bzw. Ware zurückbleibt. Das sieht unschön aus und kann die weitere Verwendung u. U. ernsthaft beeinträchtigen.

Der Erfindung liegt daher die Aufgabe der Bereitstellung eines verbesserten Etiketts der gattungsgemäßen Art zugrunde, welches insbesondere ohne besondere Fingerfertigkeit im Ganzen vom Untergrund ablösbar ist.

Diese Aufgabe wird durch ein Etikett mit den Merkmalen des Schutzanspruchs 1 gelöst.

Die Erfindung schließt den grundlegenden Gedanken ein, zwischen Papierschicht und Siegelschicht eine Trennschicht vorzusehen, auf deren einer Oberfläche die Papierschicht praktisch unlösbar angebracht ist und deren andere, in Gebrauchslage der Verpackung bzw. Ware zugewandte Oberfläche auf die Verpackung aufgesiegelt ist oder die siegelschicht trägt. Die Trennschicht wirkt bei der vorgeschlagenen Anordnung als reißfester Träger des Papieretiketts und entlastet die wenig reißfeste Papierschicht von den beim Ablösen des Etiketts von der Oberfläche einer Verpackung oder Ware gewöhnlich auftretenden Zug- und Torsionskräften.

Mit der vorgeschlagenen Lösung werden die bekannten und sowohl von den Herstellern als auch den Konsumenten geschätzten Vorteile von Papieretiketten - insbesondere die ausgezeichnete Bedruckbarkeit und angenehme Haptik - in vorteilhafter Weise mit den mechanischen Vorzügen eines Folien-Trägers verknüpft. Für den Verbraucher ergeben sich insbesondere die Vorteile einer unproblematischen, keine besondere Sorgfalt erfordernden Handhabung der erfindungsgemäßen Etiketten und des zuverlässig sauberen Aussehens der Verpackungen bzw. Waren, von denen diese abgelöst wurden. Den Herstellern kommt der beim Verbraucher eintretende deutliche Gebrauchswertvorteil in Form einer höheren Kundenakzeptanz ihrer Produkte zugute, wodurch die etwas erhöhten Herstellungskosten bei weitem aufgehoben werden.

In einer bevorzugten Ausführungsform handelt es sich bei der Trennfolie um eine orientierte Kunststofffolie, insbesondere Polypropylenfolie. Diese ist mit der Papierschicht insbesondere über eine hochfeste Klebstoffschicht verbunden, die die Integrität des Verbundes Trennfolie/Papierschicht in jedem Fall auch bei ungeschicktem, heftigen Ablösen des Etiketts von einer Verpackung oder Ware gewährleistet. Die Kunststoffolie ist als solche heißsiegelfähig ausgeführt.

Die Papierschicht ist - in an sich bekannter Weise - bevorzugt bedruckt und/oder anderweitig beschichtet, beispielsweise mit einer Schutzlackschicht bedeckt.

Die in einer Variante vorgesehene gesonderte Siegelschicht ist bevorzugt als mehrlagige Heißsiegelschicht ausgeführt, die eine Anbringung des Etiketts mit an sich bekannten Verfahren und Anlagen ermöglicht. Diese umfaßt speziell eine auf der Unterseite der Trennfolie angeordnete Primerschicht und eine darunter (also der Verpackungswandung oder Ware) zugewandte Haftlackschicht. Die Primer- und die Haftlackschicht sind ihren relevanten Parametern derart aufeinander und auf die jeweils angrenzenden Oberflächen der Trennschicht einerseits und der Verpackung bzw. Ware andererseits abgestimmt, daß sich beide beim Abziehen des Etiketts voneinander lösen. Die Heißsiegelschicht wird also gewissermaßen aufgespalten, wobei die Primerschicht im wesentlichen am Etikett und die Haftlackschicht im wesentlichen auf der Verpackungs- oder Warenoberfläche verbleibt. Dies führt insbesondere dann nicht zu einer ästhetischen Beeinträchtigung einer geöffneten Verpackung, wenn die Haftlackschicht in vorteilhafter Weise farblos ausgeführt ist.

Vorteile und Zweckmäßigkeiten der Erfindung ergeben sich im übrigen aus der nachfolgenden Beschreibung bevorzugter Ausführungsbeispiele anhand der Figuren. Von diesen zeigen:
- Fig. 1: eine schematische perspektivische Darstellung einer Verpackung gemäß einer ersten Ausführungsform der Erfindung,
- Fig. 2: eine schematische perspektivische Darstellung einer Verpackung gemäß einer zweiten Ausführungsform der Erfindung und
- Fig. 3 und 4: eine schematische Querschnittsdarstellungen bevorzugter Etikettenaufbauten.

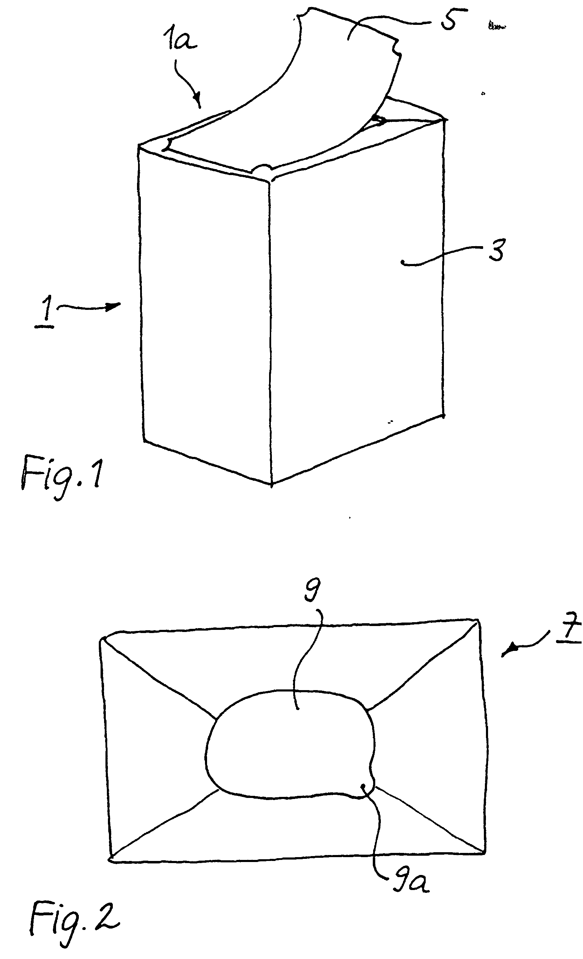

Fig. 1 zeigt ein im wesentlichen herkömmliches Filterkaffeepaket 1, dessen Verpackung (in an sich bekannter Weise) aus einer Metall- bzw. Mehrschichtfolie gebildet ist, welche mit einer Papierhülle 3 ummantelt ist, welche somit die äußere Oberfläche bildet. Auf der oberen Stirnfläche 1a des Filterkaffeepaketes 1 ist ein die Packung versiegelndes Etikett 5 angebracht.
Beim Öffnen des Kaffeepaketes 1 wird das Etikett 5 an einer Ekke oder Kante vom Verbraucher ergriffen und längs der Fläche 1a abgezogen. Da durch den erfindungsgemäßen Aufbau des Etiketts 5 dessen Integrität und Reißfestigkeit während des Abziehvorganges gesichert ist, läßt es sich ohne besondere Sorgfalt als Ganzes ablösen.

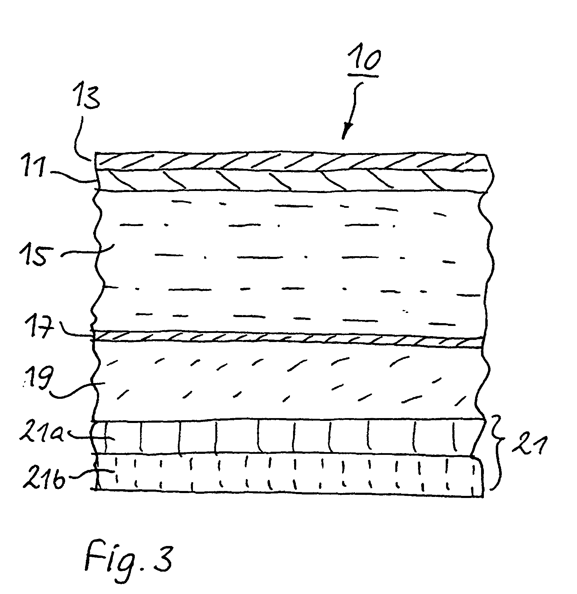

Fig. 2 zeigt als weitere Ausführungsform der Erfindung einen Briefumschlag 7 einer Werbesendung, der aus Papier besteht und mit einem Werbeaufkleber 9 mit einer Grifflasche 9a versiegelt ist. Zum Öffnen des Briefumschlages 7 wird - natürlich nach der beabsichtigten Kenntnisnahme des Aufdrucks durch den Adressaten - der Werbeaufkleber (Etikett) 9 an der Grifflasche 9a ergriffen und über die Oberfläche des Briefumschlages abgezogen. Auch hierbei sichert der erfindungsgemäße Aufbau die Unversehrtheit des Werbeaufklebers und insbesondere eine saubere Oberfläche des Briefumschlages 7 auch nach dem Öffnen.

Fig. 3 zeigt in einer schematischen Querschnittsdarstellung den Aufbau eines Etiketts 10, wie es in der Praxis als Etikett bzw. Werbeaufkleber bei den oben skizzierten Anwendungen eingesetzt werden kann. Eine mit einer Druckfarbenschicht 11 und einer Schutzlackschicht 13 bedeckte Papierschicht 15 ist über eine hochgradig zugfeste Klebstoffschicht 17 auf einem orientierten Polypropylen(PP)-Träger 19 fixiert. An dessen Unterseite ist eine Heißsiegelschicht 21 aufgebracht, die aus einer Primerschicht 21a und einer Haftlackschicht 21b zur Fixierung auf einer (nicht dargestellten) Verpackungsoberfläche aufgebaut ist.

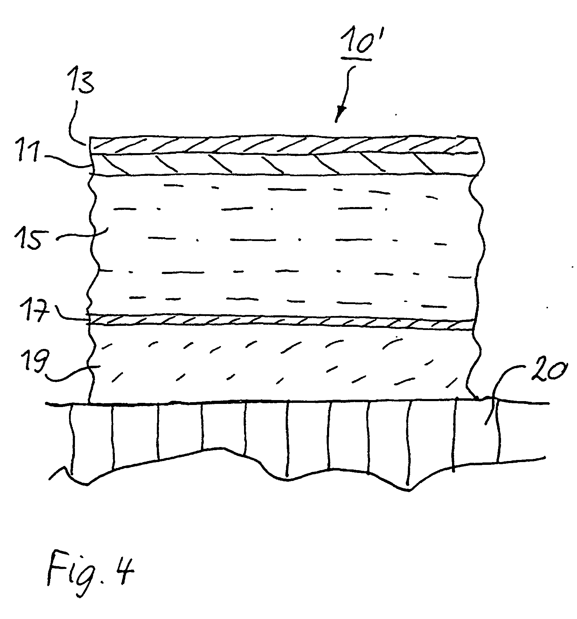

Fig. 4 zeigt in einer schematischen Querschnittsdarstellung den Aufbau eines weiteren Etiketts 10' mit modifiziertem Aufbau. Die mit der Druckfarbenschicht 11 und der Schutzlackschicht 13 bedeckte Papierschicht 15 ist hier über die Klebstoffschicht 17 auf dem Polypropylen(PP)-Träger 19 fixiert. Dieser dient selbst als Heißsiegelschicht 21 zur Fixierung des Etiketts 10' auf einer Verpackungswand 20.

Bezüglich der mechanischen Eigenschaften und Funktion dieses Etikettenaufbaus kann auf die obigen Ausführungen verwiesen werden.

Die Ausführung der Erfindung ist nicht auf diesen konkreten Schichtaufbau und die oben skizzierten Anwendungen beschränkt, sondern ebenso in einer Vielzahl von strukturellen und anwendungsseitigen Abwandlungen möglich, die im Rahmen fachgemäßen Handelns liegen.

### Bezugszeichenliste

- 1: Filterkaffeepaket
- 1a: obere Stirnfläche
- 3: Papierumhüllung
- 5; 10; 10': Etikett
- 7: Briefumschlag
- 9: Werbeaufkleber (Etikett)
- 11: Druckfarbenschicht
- 13: Schutzlackschicht
- 15: Papierschicht
- 17: Klebstoffschicht
- 19: Polypropylen(PP)-Träger
- 20: Verpackungswand
- 21: Heißsiegelschicht
- 21a: Primerschicht
- 21b: Haftlackschicht

## Patentansprüche

1. Etikett (5; 9; 10; 10'), insbesondere Verpackungsetikett zum Versiegeln eines Kaffeepaketes (2) oder einer ähnlichen Verpackung (7), welches zum Öffnen der Verpackung an einer Kante oder Ecke ergriffen und von einer Verpackungsoberfläche abgezogen wird, mit einer Papierschicht (15) und einer Siegelschicht (19),
**dadurch gekennzeichnet, daß**
zwischen der Papierschicht und der Siegelschicht eine reißfeste Trennfolie vorgesehen ist, um insbesondere ein Einreißen der Papierschicht beim Abziehen des Etiketts zu verhindern.

2. Etikett nach Anspruch 1,
**dadurch gekennzeichnet, daß**
die Trennfolie als orientierte Kunststofffolie ausgebildet ist.

3. Etikett nach Anspruch 2,
**dadurch gekennzeichnet, daß**
die Kunststofffolie (19) als Polypropylenfolie ausgebildet ist.

4. Etikett nach einem der vorangehenden Ansprüche,
**dadurch gekennzeichnet, daß**
zwischen der Trennfolie und der Papierschicht (15) eine Klebstoffschicht (17) zur Herstellung einer hochgradig zugfesten Verbindung zwischen beiden vorgesehen ist.

5. Etikett nach einem der vorangehenden Ansprüche,
**dadurch gekennzeichnet, daß**
die Siegelschicht als mehrlagige Heißsiegelschicht (21) ausgeführt ist.

6. Etikett nach Anspruch 5,
**dadurch gekennzeichnet, daß**
die Heißsiegelschicht (21) eine auf der Unterseite der Trennfolie angeordnete Primerschicht (21a) und eine der Verpackungswandung benachbarte Haftlackschicht (21b) umfaßt, wobei die Primer- und die Haftlackschicht insbesondere derart ausgebildet sind, daß sich beide beim Abziehen des Etiketts voneinander lösen und die Primerschicht im wesentlichen am Etikett und die Haftlackschicht im wesentlichen auf der Verpackungsoberfläche verbleibt.

7. Etikett nach Anspruch 6,
**dadurch gekennzeichnet, daß**
die Haftlackschicht farblos ist.

8. Etikett nach einem der vorangehenden Ansprüche,
**dadurch gekennzeichnet, daß**
die Papierschicht (15), insbesondere auf der der Trennschicht abgewandten Oberfläche, bedruckt ist.

9. Etikett nach einem der vorangehenden Ansprüche,
**dadurch gekennzeichnet, daß**
die Papierschicht (15) mit einer Schutzlackschicht (13) bedeckt ist.

## Claims

1. Label (5; 9; 10; 10'), especially a packaging label, for sealing a coffee packet (2) or similar packaging (7), which, for opening the packaging, is grasped by an edge or corner and removed from the surface of the packaging, the label having a paper layer (15) and a sealing layer (19),
**characterized in that**
between the paper layer and the sealing layer there is provided a tear-resistant separating film to prevent, in particular, the paper layer being torn when the label is removed.

2. Label according to claim 1,
**characterized in that**
the separating film is in the form of an oriented plastics film.

3. Label according to claim 2,
**characterized in that**
the plastics film (19) is in the form of a polypropylene film.

4. Label according to any one of the preceding claims,
**characterized in that**
between the separating film and the paper layer (15) there is provided an adhesive layer (17) for creating a join between the two that has high resistance to pulling apart.

5. Label according to any one of the preceding claims,
**characterized in that**
the sealing layer is in the form of a multi-layer heat-seal layer (21).

6. Label according to claim 5,
**characterized in that**
the heat-seal layer (21) comprises a primer layer (21a) arranged on the underside of the separating film and an adhesive varnish layer (21 b) adjacent to the wall of the packaging, especially the primer layer and adhesive varnish layer being such that they become detached from one another when the label is removed and the primer layer remains substantially on the label and the adhesive varnish layer remains substantially on the surface of the packaging.

7. Label according to claim 6,
**characterized in that**
the adhesive varnish layer is colourless.

8. Label according to any one of the preceding claims,
**characterized in that**
the paper layer (15) is printed, especially on the surface remote from the separating layer.

9. Label according to any one of the preceding claims,
**characterized in that**
the paper layer (15) is covered by a protective varnish layer (13).

## Revendications

1. Etiquette (5 ; 9 ; 10 ; 10'), en particulier une étiquette d'emballage pour sceller un paquet de café (2) ou un emballage similaire (7), laquelle est saisie au niveau d'un bord ou d'un coin afin d'ouvrir l'emballage et est retirée d'une surface de l'emballage, qui présente une couche en papier (15) et une couche destinée à sceller (19),
**caractérisée en ce qu'**un film de séparation résistant à la déchirure est prévu entre la couche en papier et la couche destinée à sceller afin d'empêcher en particulier un déchirement de la couche en papier lors du retrait de l'étiquette.

2. Etiquette selon la revendication 1, **caractérisée en ce que** le film de séparation est conçu comme un film en matière plastique orienté.

3. Etiquette selon la revendication 2, **caractérisée en ce que** le film en matière plastique (19) est conçu comme un film en polypropylène.

4. Etiquette selon l'une des revendications précédentes, **caractérisée en ce qu'**une couche adhésive (17) est prévue entre le film de séparation et la couche en papier (15) afin de préparer une liaison hautement résistante à la rupture entre les deux.

5. Etiquette selon l'une des revendications précédentes, **caractérisée en ce que** la couche destinée à sceller est réalisée comme une multicouche thermosoudable (21).

6. Etiquette selon la revendication 5, **caractérisée en ce que** la couche thermosoudable (21) comprend une première couche (21a) disposée sur la face inférieure du film de séparation et une couche de laque adhésive (21b) contiguë à la cloison de l'emballage, sachant que la première couche et la couche de laque adhésive sont en particulier conçues de telle sorte qu'elles se détachent l'une de l'autre lorsque l'étiquette est retirée et que la première couche demeure sensiblement sur l'étiquette et que la couche de laque adhésive demeure sensiblement sur la surface de l'emballage.

7. Etiquette selon la revendication 6, **caractérisée en ce que** la couche de laque adhésive est incolore.

8. Etiquette selon l'une des revendications précédentes, **caractérisée en ce que** la couche en papier (15) est imprimée, en particulier sur la surface opposée à la couche de séparation.

9. Etiquette selon l'une des revendications précédentes, **caractérisée en ce que** la couche en papier (15) est recouverte d'une couche protectrice de laque (13).
